Europäisches Patentamt

European Patent Office

Office européen des brevets

(19)

(11) Numéro de publication: **0 162 748**
**B1**

(12) **FASCICULE DE BREVET EUROPEEN**

(45) Date de publication du fascicule du brevet:
**07.01.88**

(51) Int. Cl.⁴: **B 01 J 8/24,** B 01 J 8/38 //
F23C11/02, C10J3/46, C10J3/48

(21) Numéro de dépôt: **85400774.7**

(22) Date de dépôt: **18.04.85**

(54) Procédé et appareil de mise en circulation de particules solides à l'intérieur d'une chambre de fluidisation.

(30) Priorité: **20.04.84 FR 8406294**

(43) Date de publication de la demande:
**27.11.85 Bulletin 85/48**

(45) Mention de la délivrance du brevet:
**07.01.88 Bulletin 88/1**

(84) Etats contractants désignés:
**AT BE DE GB IT SE**

(56) Documents cités:
**EP - A - 0 059 757
DE - A - 3 130 602
US - A - 4 314 967**

(73) Titulaire: **FRAMATOME ET CIE., Tour Fiat 1, Place de la Coupole, F-92400 Courbevoie (FR)**

(72) Inventeur: **Morin, Jean-Xavier, 9 B rue de Nevers, F-71200 Le Creusot (FR)**
Inventeur: **Marcellin, Michel, 2 rue Mazenay, F-71200 Le Creusot (FR)**

(74) Mandataire: **Polus, Camille et al, c/o Cabinet Lavoix 2, Place d'Estienne d'Orves, F-75441 Paris Cedex 09 (FR)**

ACTORUM AG

## Description

L'invention a pour objet un procédé de mise en circulation de particules solides à l'intérieur d'une chambre de fluidisation et couvre également la chambre de fluidisation perfectionnée pour la mise en oeuvre du procédé.

On utilise depuis longtemps la technique du lit fluidisé pour la production de chaleur ou plus généralement le traitement de matières granulaires se présentant sous forme de particules de dimensions relativement faibles. Le traitement s'effectue à l'intérieur d'une chambre de fluidisation constituée d'une enceinte allongée verticale alimentée en matières solides sous forme de particules et à la base de laquelle est injectée un gaz de fluidisation qui circule vers le haut à une vitesse suffisante pour mettre les particules en suspension, la vitesse limite de fluidisation dépendant de la granulométrie et de la densité des particules.

En raison du rendement élevé de conversion, on utilise en particulier les lits fluidisés pour la combustion ou la gazéification de matières hydrocarbonées comme du charbon, du lignite, du bois, etc... Si, par exemple, le charbon est brûlé dans une chaudière, celle-ci peut être constituée d'une enceinte de grandes dimensions comprenant une partie inférieure dans laquelle se réalise la combustion en lits fluidisés et une partie supérieure parcourue par les gaz chauds issus de la combustion et dans laquelle on place un faisceau de tubes d'échange de chaleur.

On peut également réaliser en lits fluidisés d'autres traitements et, pour augmenter le rendement du traitement effectué, on peut faire circuler les gaz à une vitesse importante, par exemple supérieure à 2 m/s. Dans ce cas, une proportion importante de particules est entraînée vers le haut avec les gaz et l'on distingue à l'intérieur de la chambre de fluidisation une zone inférieure dense à forte concentration de particules, surmontée d'une zone diluée contenant une proportion importante de particules entraînées avec les gaz vers la partie supérieure de la chambre, celle-ci débouchant dans un circuit d'évacuation des gaz et des particules entraînées. Le circuit d'évacuation passe alors par un dispositif de récupération des particules entraînées, généralement du genre cyclone, qui comprend une sortie supérieure des gaz épurés et une sortie inférieure des particules récupérées reliée à la chambre de fluidisation par un circuit de recyclage des particules dans le lit fluidisé.

La plupart des traitements correspondent à des réactions exothermiques et justifient une récupération de la chaleur au moyen d'un échangeur constitué d'un faisceau de tubes parcourus par un fluide caloporteur et placé au contact des gaz chauds et/ou des particules. Dans les chaudières classiques en lit fluidisé, la vitesse de circulation du gaz de fluidisation est réglée de telle sorte que seules les cendres fines puissent être entraînées avec les gaz. On peut alors placer sans danger l'échangeur de chaleur dans la zone diluée au-dessus du lit fluidisé dense. En revanche, si l'on fonctionne en lit circulant, et si l'on place un échangeur de chaleur à l'intérieur de la chambre de réaction, dans la zone diluée du lit fluidisé, les particules généralement abrasives entraînées par les gaz dans cette zone entraînent une usure rapide de l'échangeur qui, en outre, gêne la circulation ascendante des gaz et l'entraînement des particules. On peut réduire cet inconvénient en utilisant un échangeur tubulaire constitué par exemple d'une paroi membranée placée le long de la paroi latérale de l'enceinte dont elle peut d'ailleurs constituer la face interne, celle-ci étant recouverte extérieurement d'un revêtement réfractaire. Dans ce cas, l'échangeur de chaleur ne gêne pas la circulation des gaz mais il est également au contact d'une assez faible proportion des particules solides chaudes dont la plus grande partie est entraînées vers le haut dans la partie centrale de l'enceinte et la récupération calorifique est alors assez faible.

En outre, la réaction de combustion se poursuit dans la zone diluée sur une hauteur qui dépend de la qualité et de la granulométrie du combustible, compte tenu de la vitesse de fluidisation. L'échangeur de chaleur placé dans cette zone peut y être soumis, de ce fait, à une corrosion excessive.

C'est pourquoi, lorsque l'on fonctionne en lit circulant, on préfère généralement placer l'échangeur de chaleur à l'extérieur de la chambre de fluidisation, par exemple dans le circuit de recyclage des particules.

L'invention a pour objet un procédé de mise en circulation des particules à l'intérieur de la chambre de fluidisation permettant d'y effectuer dans de bonnes conditions une récupération interne de la chaleur du lit fluidisé.

D'autre part, même lorsque l'on ne cherche pas particulièrement à récupérer de la chaleur, le rendement du traitement est lié au temps de passage des particules dans le lit fluidisé et par conséquent à leur vitesse de circulation. Lorsque l'on fonctionne en lit fluidisé, il existe une certaine circulation en circuit fermé des particules à l'intérieur de la chambre de fluidisation, certaines particules étant rapidement entraînées vers le circuit d'évacuation alors que d'autres retombent dans le lit fluidisé. Cependant, ces mouvements sont désordonées et l'on n'a pas de moyen de les contrôler dans le but d'améliorer le rendement.

L'invention permet au contraire une mise en circulation ordonnée des particules solides à l'intérieur de la chambre de fluidisation permettant d'améliorer le rendement du traitement et d'augmenter le taux de remplissage de la chambre de fluidisation et par conséquent d'utiliser la capacité de celle-ci de façon optimale. En outre, l'invention permet de ménager à l'intérieur de la chambre de fluidisation des zones bien séparées dans lesquelles, d'une façon générale, les particules pourront être soumises à des traitements ou des réactions différents.

Conformément à l'invention, on détermine, dans la partie supérieure de la chambre de fluidisation, une diminution de la vitesse de circulation des gaz avant leur évacuation, de façon à réaliser au-dessus de la zone diluée du lit fluidisé, une zone supérieure à plus forte concentration en particules dans laquelle une partie des particules s'échappe du courant gazeux et retombe en pluie le long de la paroi latérale de la chambre en formant une nappe annulaire descendante.

Lorsque l'on désire effectuer une récupération interne de chaleur, on fait descendre la nappe annulaire de particules le long d'un échangeur de chaleur tubulaire placé à l'intérieur de la chambre de fluidisation, au moins dans la zone diluée du lit fluidisé.

Dans un mode de réalisation préférentiel, on détermine la diminution de vitesse du courant gazeux par élargissement de la section transversale de passage des gaz, à la partie supérieure de la chambre de fluidisation. De préférence, on fait varier de haut en bas la section transversale de passage des gaz dans la chambre de fluidisation de façon à ménager à l'intérieur de celle-ci une zone inférieure à large section délimitant la partie dense du lit fluidisé, une zone médiane à section rétrécie correspondant à la partie diluée et une zone supérieure à section élargie correspondant à la partie supérieure concentrée de formation de la nappe annulaire de particules. De préférence, la vitesse de circulation ascendante du courant gazeux est de 6 à 12 m/s dans la partie médiane de la chambre et de 2 à 6 m/s dans la partie supérieure de concentration des particules.

L'invention couvre également une chambre de fluidisation perfectionnée pour la mise en oeuvre du procédé et qui est munie à sa partie supérieure d'un moyen de diminution de la vitesse de circulation des gaz avant leur évacuation de la chambre, constitué de préférence par un élargissement de la section transversale de la chambre à la partie supérieure de celle-ci.

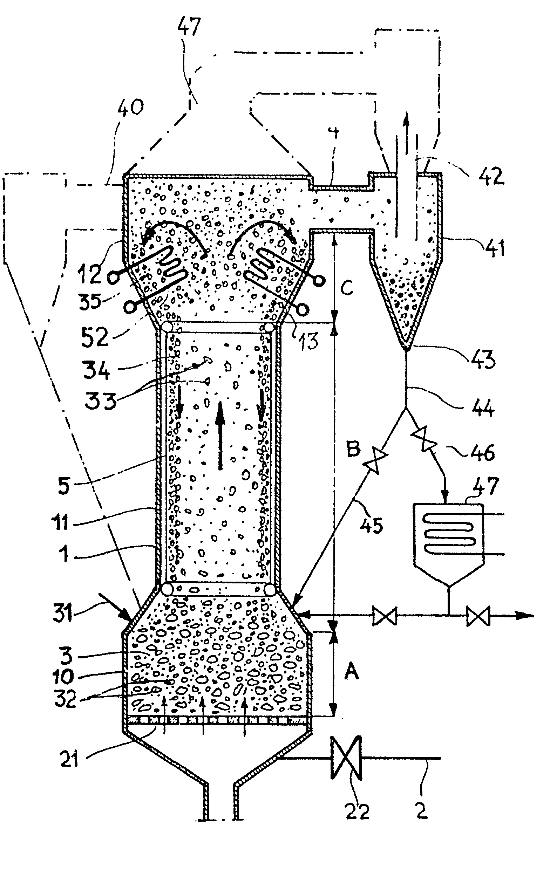

L'invention sera mieux comprise par la description suivante d'un mode de réalisation particulier donné à titre d'exemple, en se référant à la figure annexée qui représente schématiquement, en coupe axiale, une chambre de fluidisation perfectionnée selon l'invention.

La chambre de fluidisation 1 est constituée d'une enceinte verticale allongée à la base de laquelle débouche un circuit 2 d'introduction d'un gaz de fluidisation réparti de façon homogène sur toute la section transversale de l'enceinte 1, par exemple au moyen d'une grille de fluidisation 21.

Le circuit d'alimentation en gaz 2 est muni de moyens 22 de réglage du débit qui permettent de contrôler la vitesse du courant ascendant de gaz à l'intérieur de l'enceinte 1. Celle-ci contient une matière solide sous forme de particules 3 introduite par un circuit d'alimentation 31. Lorsque la vitesse du courant ascendant de gaz dépasse une vitesse limite dépendant de la granulométrie moyenne et de la densité des particules 3, celles-ci se mettent en suspension pour former un lit fluidisé. Selon un mode de fonctionnement connu, la vitesse de circulation des gaz est suffisante pour que le lit fluidisé soit de type circulant. Dans ce cas, les particules les plus grosses 32 sont simplement soulevées par les gaz mais la plus grande partie 33 des particules, de granulométrie moyenne et fine, est susceptible d'être entraînée vers le haut par le courant ascendant de gaz. On distingue alors à l'intérieur de l'enceinte 1 une zone dense A contenant une forte concentration de particules solides et une zone diluée B contenant une proportion plus faible mais non négligeable de particules solides entraînées avec les gaz. A sa partie supérieure, l'enceinte 1 débouche dans un circuit 4 d'évacuation des gaz et des particules entraînées qui passent par un dispositif 41 de récupération des particules consitué par exemple d'un ou plusieurs cylones comportant une sortie supérieure 42 des gaz épurés et une sortie inférieure 43 débouchant dans une conduite de sortie 44 qui alimente un circuit 45 de recyclage des particules répérés dans le lit fluidisé et peut comporter une branche 46 d'évacuation d'une partie des particules pour une autre utilisation.

Pour récupérer la chaleur interne des particules, dans le cas où celles-ci sont soumises à une réaction exothermique, il est intéressant de les faire passer par un échangeur de chaleur 47 qui peut être placé sur le circuit de recyclage 45 ou bien, comme on l'a représenté sur la figure, sur la branche de dérivation 46. Comme on le fait habituellement lorsque l'on fonctionne à des vitesses de fluidisation faibles, un échangeur tubulaire 5 est placé dans la zone diluée B du lit fluidisé et peut constituer la paroi interne de la chambre de fluidisation 1.

Selon la caractéristique essentielle de l'invention, on détermine une diminution de la vitesse de circulation du courant gazeux dans la partie supérieure de l'enceinte 1, avant l'évacuation des gaz par la conduite 4. A cet effet, la partie supérieure 12 de l'enceinte 1 a une section élargie et se raccorde à la paroi latérale 11 par une paroi tronconique 13 de façon à former, au-dessus de la zone diluée B du lit fluidisé, une zone supérieure C dans laquelle la vitesse de circulation des gaz est moins forte, ce qui entraîne une augmentation de la concentration en particules. Dans cette zone concentrée C, une partie (35) des particules, notamment les plus lourdes, a tendance à s'échapper du courant gazeux, en particulier le long de la paroi latérale 12 où la vitesse est encore limitée. Il se forme ainsi le long de la paroi latérale 12 une couche concentrée de particules (35) qui diminuent de vitesse puis redescendent vers le bas et tombent dans la zone diluée B en formant une nappe annulaire 34 descendant en pluie le long de l'échangeur tubulaire 5 pour revenir dans la zone dense A du lit fluidisé. La pente de la paroie de raccordement 13 est adaptée à la granulométrie des particules et au degré de recirculation désiré.

De la sorte, l'échangeur de chaleur 5 est mis au contact d'une couche dense de particules se renouvelant continuellement et qui, jusqu'à leur arrivée le long de l'échangeur, restent à la température élevée régnant dans l'ensemble de l'enceinte 1. On sait en effet que, dans un fonctionnement en lit circulant, l'ensemble de la chambre de fluidisation se trouve sensiblement à la même température. Ce mouvement descendant régulier des particules le long de l'échangeur soumet celui-ci à une usure plus réduite que les mouvements désordonnés des particules montant dans la partie centrale de l'enceinte 1, l'échangeur 5 étant, d'ailleurs, protégé des impacts de particules provenant de la partie centrale par la nappe 34, relativement dense, de particules descendantes.

Pour la même raison, on peut envisager de placer dans la zone supérieure C de la chambre 1 des échangeurs de chaleur 52 qui, grâce à la diminution de vitesse produite dans cette zone, seront protégés des impacts de particules à grande vitesse provenant de la zone diluée B et amortis par l'augmentation de concentration des particules produites dans la zone C.

Grâce à ces dispositions, la chambre de fluidisation est divisée en trois zones: la zone inférieure dense A dans laquelle se produit la combustion, la zone diluée B où se réalise l'échange de chaleur et la zone supérieure C, à plus forte concentration dans laquelle se forme la nappe descendante 34 et où peut également se produire un transfert de chaleur.

Ainsi, même dans un fontionnement en lit circulant, il est possible de réaliser la combustion et l'échange de chaleur à l'intérieur même de la chambre de réaction, donc avec le meilleur rendement mais dans des zones bien séparées, ce qui permet de diminuer le risque d'usure et de corrosion des échangeurs de chaleur. En effet, même si la combustion se poursuit encore dans la zone diluée B, en particulier dans un lit circulant, l'échangeur de chaleur 5 qui s'y trouve est protégé non seulement des impacts de particules mais également des effets corrosifs de la combustion par la nappe dense 34 de particules qui descendent. D'autre part, la hauteur de la zone B peut être déterminée en fonction de la qualité et de la granulométrie des particules et de la vitesse de fluidisation de façon que la combustion soit pratiquement achevée à l'entrée dans la zone supérieure C.

Pour augmenter l'effet de séparation des zones, il est avantageux de donner à la chambre de fluidisation la forme représentée sur la figure, qui comprend une section transversale large à la partie inférieure 10 puis se rétrécissant dans la partie médiane 11 pour s'élargir de nouveau à la partie supérieure 12. On délimite ainsi de façon relativement précise les trois zones superposées du lit fluidisé, l'augmentation de vitesse dans la zone médiane étant produite par le rétrécissement de la section de passage des gaz et, éventuellement, l'injection d'un agent de fluidisation. Cette séparation nette entre la zone inférieure A de combustion et la zone supérieure B, C, de transfert de chaleur permet de mieux contrôler le fonctionnement du lit fluidisé. On remarquera également que la réalisation d'une zone plus concentrée à la partie supérieure de la chambre de fluidisation et d'une couche annulaire dense de particules qui ruissellent le long de la paroi latérale de l'enceinte permet d'augmenter la densité globale de la suspension fluidisée et par conséquent les performances de la chambre de réaction, compte tenu de ses dimensions.

L'invention a été décrite essentiellement dans le cas où l'on cherche à augmenter le transfert de chaleur à l'intérieur de la chambre mais les dispositions décrites permettent, d'une façon générale, de réaliser un traitement avec un rendement optimal grâce à la mise en circulation intense des particules à l'intérieure même du réacteur, sans passer par le circuit de recyclage.

En outre, grâce à la séparation de l'intérieur du réacteur en zones distinctes, on pourrait y soumettre les particules à des traitements ou réactions différents selon les zones.

D'ailleurs, l'invention ne se limite évidemment pas au seul mode de réalisation qui vient d'être décrit mais couvre les perfectionnements ou les variantes qui pourraient être imaginés en appliquant les même principes.

C'est ainsi que l'on pourrait juger avantageux, après avoir diminué la vitesse du courant gazeux dans la partie supérieure 12 de l'enceinte, d'évacuer les gaz par un orifice de sortie 47 placé dans l'axe de l'enceinte, le circuit d'évacuation 4 ayant alors la forme représentée en traits mixtes sur la figure.

D'autre part, pour favoriser la stabilité de la zone supérieure dense C du lit fluidisé, il pourrait être intéressant d'évacuer les gaz de façon symétrique par exemple dans deux ou plusiers circuits d'évacuation 4 et 40 comportant chacun un organe de récupération des particules débouchant dans un circuit de recyclage de celle-ci dans le lit fluidisé.

Enfin, pour augmenter la vitesse de circulation des gaz dans la zone diluée B et la diminuer dans la zone supérieure C, il est plus simple de jouer sur la section de passage du courant gazeux mais on pourrait également utiliser d'autres moyens et par exemple injecter un fluide auxiliaire ou prélever un certain débit de gaz à la hauteur voulue.

**Revendications**

1. Procédé de mise en circulation de particules solides à l'intérieur d'une chambre de fluidisation verticale (1) alimentée en matière solide sous forme de particules (3) et à la base de laquelle est injecté un gaz de fluidisation à une vitesse suffisante pour former un lit fluidisé circulant comprenant une zone inférieure dense (A) à forte concentration de particules surmontée d'une zone diluée (B) contenant des particules entraînées par le courant ascendant de gaz vers la partie supérieure de la chambre (1), celle-ci débouchant dans un circuit (4) d'évacuation des gaz et des particules sur lequel est placé un moyen (41) de récupération des particules entraînées relié à la chambre de fluidisation (1) par un circuit (44, 45) de recyclage des particules récupérées, caractérisé par le fait que l'on détermine, dans la partie supérieure de la chambre de fluidisation (1), une diminution de la vitesse de circulation des gaz avant leur évacuation de façon à réaliser au-dessus de la zone diluée (B) du lit fluidisé une zone supérieure (C) à plus forte concentration en particules dans laquelle une partie des particules s'échappe du courant gazeux et retombe en pluie le long de la paroi latérale de la chambre en formant une nappe annulaire descendante (34).

2. Procédé de mise en circulation de particules selon la revendication 1, caractérisé par le fait que l'on fait descendre la nappe annulaire (34) de particules le long d'un échangeur de chaleur tubulaire (5) placé à l'intérieur de la chambre de fluidisation (1), au moins dans la zone diluée (B) du lit fluidisé.

3. Procédé de mise en circulation de particules selon l'une des revendications 1 et 2, caractérisé par le fait que l'on détermine la diminution de vitesse du courant gazeux par élargissement de la section transversale de passage des gaz à la partie supérieure de la chambre de fluidisation (1).

4. Procédé de mise en circulation de particules selon la revendication 3, caractérisé par le fait que l'on fait varier de haut en bas la section transversale de passage des gaz dans la chambre de fluidisation de façon à ménager à l'intérieur de celle-ci une zone inférieure (A) à large section délimitant la partie dense du lit fluidisé, une zone médiane (B) à section rétrécie correspondant à la partie diluée et une zone supérieure (C) à section élargie correspondant à la partie supérieure concentrée de formation de la nappe annulaire (34).

5. Procédé de mise en circulation de particules selon l'une des revendications précédentes, caractérisé par le fait que la vitesse de circulation ascendante du courant gazeux est de 6 à 12 m/s dans la partie médiane de la chambre et de 2 à 6 m/s dans la partie supérieure de concentration des particules.

6. Chambre de fluidisation, consituée d'une enceinte allongée verticale (1) alimentée en matière solide sous forme de particules (3), parcourue par un courant ascendant de gaz de fluidisation à une vitesse de façon à ménager à l'intérieur de l'enceinte (1) un lit fluidisé circulant comprenant une zone inférieure dense (A) à forte concentration de particules, surmontée d'une zone diluée (B) contenant des particules entraînées par le courant ascendant de gaz vers la partie supérieure de l'enceinte, celle-ci débouchant dans un circuit (4) d'évacuation des gaz comprenant des moyens (41) de récupération des particules entraînées et (45) de recyclage de celle-ci à l'intérieur de la chambre de fluidisation (1), cette dernière étant caractérisé par le fait qu'elle est munie à sa partie supérieure de moyens (12) de diminution de la vitesse de circulation des gaz avant leur évacuation pour la formation, au-dessus de la zone diluée (B) du lit fluidisé, d'une zone (C) à plus forte concentration en particules, dans laquelle une partie (35) de celles-ci s'échappe du courant gazeux et retombe en pluie en formant une nappe annulaire descendante (34) le long de la paroi latérale (11) de la chambre.

7. Chambre de fluidisation selon la revendication 6, caractérisée par le fait que le moyen de diminution de la vitesse de circulation des gaz est constitué par un élargissement (12) de la section transversale de la chambre (1) à la partie supérieure de celle-ci.

8. Chambre de fluidisation selon la revendication 7, caractérisée par le fait que la chambre de fluidisation comprend une partie inférieure (10) à section large dans laquelle se forme la zone dense (A) du lit fluidisé, une partie médiane (11) à section rétrécie dans laquelle se forme la zone diluée (B) et une partie supérieure (12) à section élargie dans laquelle se réalise la diminution de vitesse avec concentration des particules entraînées et séparation du courant gazeux d'une partie (35) de ces dernières.

9. Chambre de fluidisation selon l'une des revendications 6, 7, 8, caractérisée par le fait qu'elle est limitée au moins sur la hauteur de la zone diluée (B) par un échangeur de chaleur tubulaire (5) le long duquel descend la nappe annulaire (34) de particules séparées du courant gazeux.

10. Chambre de fluidisation selon l'une des revendications 6 à 9, caractérisée par le fait qu'elle comprend des organes (52) de récupération de chaleur placé à la partie supérieure (12) de l'enceinte dans la zone supérieure (C) à vitesse diminuée du lit fluidisé.

## Patentansprüche

1. Verfahren für die Zirkulation von Feststoffen innerhalb einer vertikalen Wirbelkammer (1), die mit festem Material in Form von Partikeln (3) versorgt wird und an deren Basis ein Fluidisiergas mit einer Geschwindigkeit zugeführt wird, die ausreichend ist, um eine zirkulierende Wirbelschicht zu bilden, umfassend eine dichte untere Zone (A) mit starker Konzentration von Partikeln, überragt von einer verdünnten Zone (B) enthaltend Partikel, die durch die aufsteigende Gasströmung zum oberen Teil der Kammer (1) mitgeführt werden, wobei diese in einen Kreislauf (4) zum Abführen der Gase und der Partikel mündet, an dem ein Mittel (41) zur Wiedergewinnung der mitgeführten Partikel angeordnet ist, das mit der Wirbelkammer (1) durch einen Kreislauf (44, 45) zur Rückführung der wiedergewonnenen Partikel verbunden ist, dadurch gekennzeichnet, dass im oberen Teil der Wirbelkammer (1) eine Verringerung der Zirkulationsgeschwindigkeit der Gase vor ihrer Abführung derart bestimmt wird, dass oberhalb der verdünnten Zone (B) der Wirbelschicht eine obere Zone (C) mit stärkerer Partikelkonzentration ausgeführt wird, in der ein Teil der Partikel aus der gasförmigen Strömung entweicht und im Regen längs der Seitenwand der Kammer unter Bildung einer absinkenden Ringschicht (34) zurückfällt.

2. Verfahren für die Zirkulation von Partikeln nach Anspruch 1, dadurch gekennzeichnet, dass die Ringschicht (34) von Partikeln längs eines Röhrenwärmeaustauschers (5) absinkt, der innerhalb der Wirbelkammer (1), wenigstens in der verdünnten Zone (B) der Wirbelschicht, angeordnet ist.

3. Verfahren für die Zirkulation von Partikeln nach einem der Ansprüche 1 und 2, dadurch gekennzeichnet, dass die Geschwindigkeitsverringerung der gasförmigen Strömung durch Erweiterung des Durchtrittsquerschnittes der Gase am oberen Teil der Wirbelkammer (1) bestimmt wird.

4. Verfahren für die Zirkulation von Partikeln nach Anspruch 3, dadurch gekennzeichnet, dass der Durchtrittsquerschnitt der Gase in der Wirbelkammer derart von oben nach unten verändert wird, dass in deren Inneren eine untere Zone (A) mit grossem Querschnitt, die den dichten Teil der Wirbelschicht begrenzt, eine Mittelzone (B) mit verengtem Querschnitt entsprechend dem verdünnten Teil und eine obere Zone (C) mit erweitertem Querschnitt entsprechend dem konzentrierten oberen Teil zur Bildung der Ringschicht (34) herbeigeführt wird.

5. Verfahren für die Zirkulation von Partikeln nach einem der Ansprüche, dadurch gekennzeichnet, dass die Geschwindigkeit der aufsteigenden Zirkulation der gasförmigen Strömung 6 bis 12 m/s im Mittelteil der Kammer und 2 bis 6 m/s im oberen Teil der Konzentration der Partikel ist.

6. Wirbelkammer, gebildet durch einen vertikalen verlängerten Raum (1), der mit Feststoff in Form von Partikeln (3) versorgt wird, von einer aufsteigenden Strömung von Fluidisiergas mit einer derart geregelten Geschwindigkeit durchströmt wird, dass innerhalb des Raums (1) eine zirkulierende Wirbelschicht eingerichtet wird, umfassend eine dichte untere Zone (A) mit starker Konzentration von Partikeln, überragt von einer verdünnten Zone (B) enthaltend durch die aufsteigende Gasströmung zum oberen Teil des Raums mitgeführte Partikel, wobei dieser in einen Kreislauf (4) zum Abführen der Gase enthaltend Mittel (41) zur Wiedergewinnung der mitgeführten Partikel und (45) zur Rückführung von diesen ins Innere der Wirbelkammer (1) mündet, wobei letztere dadurch gekennzeichnet ist, dass sie an ihrem oberen Teil mit Mitteln (12) zur Verringerung der Zirkulationsgeschwindigkeit der Gase vor ihrem Abführen für die Bildung einer Zone (C) mit stärkerer Konzentration von Partikeln, oberhalb der verdünnten Zone (B) der Wirbelschicht, in der ein Teil (35) von diesen von der gasförmigen Strömung entweicht und im Regen unter Bildung einer absinkenden Ringschicht (34) längs der Seitenwand (11) der Kammer zurückfällt.

7. Wirbelkammer nach Anspruch 6, dadurch gekennzeichnet, dass das Mittel zur Verringerung der Zirkulationsgeschwindigkeit der Gase durch eine Erweiterung (12) des Querschnitts der Kammer (1) an deren oberem Teil gebildet ist.

8. Wirbelkammer nach Anspruch 7, dadurch gekennzeichnet, dass die Wirbelkammer einen unteren Teil (10) mit grossem Querschnitt, in dem sich die dichte Zone (A) der Wirbelschicht bildet, einen Mittelteil (11) mit verengtem Querschnitt, in dem sich die verdünnte Zone (B) bildet, und einen oberen Teil (12) mit erweitertem Querschnitt umfasst, in der die Geschwindigkeitsverringerung mit Konzentration der mitgeführten Partikel und Trennung der gasförmigen Strömung von einem Teil (35) der letzteren stattfindet.

9. Wirbelkammer nach einem der Ansprüche 6, 7, 8, dadurch gekennzeichnet, dass sie wenigstens in der Höhe der verdünnten Zone (B) durch einen Röhrenwärmeaustauscher (5) begrenzt ist, längs dessen die Ringschicht (34) von von der gasförmigen Strömung getrennten Partikeln absinkt.

10. Wirbelkammer nach einem der Ansprüche 6 bis 9, dadurch gekennzeichnet, dass sie Organe (52) zur Wärmerückgewinnung umfasst, angeordnet am oberen Teil (12) des Raums in der oberen Zone (C) mit verringerter Geschwindigkeit der Wirbelschicht.


**Claims**

1. Process for circulating solid particles within a vertical fluidization chamber (1) which is fed with solid material in the form of particles (3) and at the base of which a fluidization gas is injected at a sufficient speed to form a circulating fluidized bed comprising a dense lower zone (A) with a high concentration of particles, above which is located a dilute zone (B) containing particles carried along by the rising stream of gas towards the upper part of the chamber (1), the latter opening into a circuit (4) for discharging the gases and the particles, in which is located a means (41) of recovering the particles carried along, which is connected to the fluidization chamber (1) by means of a circuit (44, 45) for recycling the recovered particles, characterized in that, in the upper part of the fluidization chamber (1), a reduction in the circulation speed of the gases is determined before their discharge, so as to produce above the dilute zone (B) of the fluidized bed an upper zone (C) with a higher concentration of particles, in which some of the particles escape from the stream of gas and fall back in a shower along the side wall of the chamber, forming a descending annular layer (34).

2. Process for circulating particles according to Claim 1, characterized in that the annular layer (34) of particles is made to descend along a tubular heat exchanger (5) located inside the fluidization chamber (1), at least in the dilute zone (B) of the fluidized bed.

3. Process for circulating particles according to either of Claims 1 and 2, characterized in that the reduction in the speed of the stream of gas is determined by a widening of the flow cross-section of the gases in the upper part of the fluidization chamber (1).

4. Process for circulating particles according to Claim 3, characterized in that the flow cross-section of the gases in the fluidization chamber is varied from top to bottom, so as to form within the chamber a lower zone (A) of wide cross-section delimiting the dense part of the fluidized bed, a middle zone (B) of narrowed cross-section corresponding to the dilute part and an upper zone (C) of widened cross-section corresponding to the concentrated upper part for forming the annular layer (34).

5. Process for circulating particles according to any of the preceding claims, characterized in that the upward circulation speed of the stream of gas is from 6 to 12 m/s in the middle part of the chamber and from 2 to 6 m/s in the upper part where the particles are concentrated.

6. Fluidization chamber consisting of a vertical elongate enclosure (1) which is fed with solid material in the form of particles (3) and through which a rising stream of fluidization gas passes at a sped adjusted so as to provide within the enclosure (1) a circulating fluidized bed comprising a dense lower zone (A) with a high concentration of particles, above which is located a dilute zone (B) containing particles carried along by the rising stream of gas towards the upper part of the enclosure, the latter opening into a gas discharge circuit (4) incorporating means (41) of recovering the particles carried along, and means (45) of recycling the latter into the interior of the fluidization chamber (1), the latter being characterized in that it is equipped in its upper part with means (12) of reducing the circulation speed of the gases before their discharge, to form, above the diluite zone (B) of the fluidized bed, a zone (C) with a higher concentration of particles, in which some particles (35) escape from the stream of gas and fall back in a shower, forming a descending annular layer (34) along the side wall (11) of the chamber.

7. Fluidization chamber according to Claim 6, characterized in that means of reducing the circulation speed of the gases consists of a widening (12) of the cross-section of the chamber (1) in the upper part of the latter.

8. Fluidization chamber according to Claim 7, characterized in that the fluidization chamber comprises a lower part (10) of wide cross-section, in which the dense zone (A) of the fluidized bed forms, a middle part (11) of narrowed cross-section, in which the dilute zone (B) forms, and an upper part (12) of widened cross-section, in which the reduction in speed takes place, with concentration of the particles carried along and with separation of the stream of gas from some (35) of these.

9. Fluidization chamber according to one of Claims 6, 7 and 8, characterized in that it is limited, at least over the height of the dilute zone (B), by a tubular heat exchanger (5), along which descends the annular layer (34) of particles separated from the stream of gas.

10. Fluidization chamber according to one of Claims 6 to 9, characterized in that it incorporates heat recovery devices (52) located in the upper part (12) of the enclosure in the upper zone (C) of reduced speed of the fluidized bed.